# EUROPÄISCHE PATENTANMELDUNG

(11) **EP 1 491 083 A2**
(43) Veröffentlichungstag der Anmeldung: **29.12.2004**
(21) Anmeldenummer: 04102621.2
(22) Anmeldetag: 09.06.2004
(51) Int. Cl.: A01D 45/02

(54) **Pflückeinrichtung**

(30) Priorität: 17.06.2003 DE 10327176
(71) Anmelder: Maschinenfabrik Kemper GmbH & Co. KG, 48973 Stadtlohn (DE)
(72) Erfinder: Rickert, Clemens, 48703 Stadtlohn (DE); Resing, Alfons, 48703 Stadtlohn (DE); Bongert, Dirk, 48703 Stadtlohn (DE)
(74) Vertreter: Holst, Sönke, Dr.

(57) **Zusammenfassung**

Die Erfindung bezieht sich auf eine Pflückeinrichtung (14) mit Abstreifkanten (36, 38), zwischen denen ein Pflückspalt (20) definiert ist, und mit Mitteln zum Einziehen von Pflanzenstängeln (26) in den Pflückspalt (20).

Es wird vorgeschlagen, dass wenigstens eine der Abstreifkanten (36, 38) in der Einzugsrichtung der Pflanzenstängel (26) federnd abgestützt ist.

Außerdem wird empfohlen, dass zumindest eine Abstreifkante (36) mit in den Pflückspalt (20) und/oder entgegen der Einzugsrichtung des Pflanzenstängels (26) überstehenden Erhebungen (40) ausgestattet ist, zwischen denen die Abstreifkante (36) mit von Erhebungen freien Abschnitten (42) versehen ist, und dass die Länge der von Erhebungen freien Abschnitte (42) ein Mehrfaches der Länge der Erhebungen (40) ist.

Alternativ oder zusätzlich wird vorgeschlagen, dass eine erste Abstreifkante (36) in einer anderen Höhe angebracht ist als eine zweite Abstreifkante (38), und dass oberhalb der zweiten Abstreifkante (38) eine Fangeinrichtung (44) für die Fruchtstände (28) angeordnet ist.

## Beschreibung

Die Erfindung betrifft eine Pflückeinrichtung mit Abstreifkanten, zwischen denen ein Pflückspalt definiert ist, und mit Mitteln zum Einziehen von Pflanzenstängeln in den Pflückspalt, so dass Fruchtstände durch die Abstreifkanten von den Pflanzenstängeln abtrennbar sind.

Derartige Pflückeinrichtungen finden insbesondere zur Maisernte Verwendung. Im Stand der Technik sind zwar Pflückeinrichtungen bekannt, bei denen die Abstreifkanten in seitlicher Richtung federnd beweglich sind (DE 198 34 248 A, gemäß der die seitliche Verstellung der Pflückplatten mit einer Dämpfung versehen ist, und der Maispflücker Olimac Drago DR 6, beschrieben in Profi Nr. 11 (2002), Seite 32f), jedoch sind die Abstreifkanten in der Richtung, in der die Pflanzen eingezogen werden, d. h. in vertikaler Richtung, stets starr angebracht. Beim Beobachten des Pflückvorgangs ist festzustellen, dass der Kolben mit einem lauten Knall vom Pflanzenstängel getrennt wird. Es treten somit hohe Kraftspitzen auf, die dazu führen können, dass nicht nur der Kolben, sondern auch die oberen Teile der Pflanze abgetrennt werden. Letztere führen zu einer unerwünscht hohen Belastung des Mähdreschers.

Weiterhin sind die Abstreifkanten im Stand der Technik in der Regel in ihrer Längsrichtung betrachtet glatt, d. h. frei von Erhebungen und anderen Unregelmäßigkeiten. Dadurch ergibt sich bei der Annäherung eines Fruchtstands an die Abstreifkante ein linearer Kraftanstieg, der mit dem oben beschriebenen plötzlichen Abriss des Fruchtstands endet, welcher einen unerwünschten Abriss des Pflanzenstängels zur Folge haben kann. Diese glatte Konfiguration der Abstreifkanten begünstigt somit das ungewünschte Abreißen von Pflanzenstängeln. In der SU 144 068 A ist ein Maispflücker dargestellt, der eine mit sägezahnförmigen Erhebungen ausgestattete Kante aufweist, die zum Abtrennen der Kolben dient. Dort wird der Kolben eher abgeschnitten als abgerissen, was den Nachteil hat, dass auch Blätter abgetrennt werden, die zu einer unerwünschten Belastung des Mähdreschers führen.

Schließlich ist es bekannt, die Abstreifkanten beidseits eines Pflückspalts in unterschiedlichen Höhen anzuordnen (DE 42 41 949 A, DE 43 06 749 A, US 2 870 593 A, US 4 553 379 A, US 5 911 673 A), jedoch werden keine besonderen Vorteile dieser Anordnung erwähnt. Die EP 0 179 930 offenbart eine Fangeinrichtung oberhalb des Pflückspalts mit einem nach innen gekrümmten Blech, das unerwünschte Kolbenverluste verhindern soll. Die beiden Abstreifkanten liegen in gleicher Höhe, so dass die Kolben etwa vertikal nach oben geschleudert werden. Die Wirkung der Fangeinrichtung kann somit nicht befriedigend sein, da sie nicht alle Kolben erfasst.

Die der Erfindung zu Grunde liegende Aufgabe wird darin gesehen, eine verbesserte Pflückeinrichtung bereitzustellen, bei der die oben genannten Nachteile nicht auftreten.

Diese Aufgabe wird erfindungsgemäß durch die Lehren der Patentansprüche 1, 2 und 4 gelöst, wobei in den weiteren Patentansprüchen Merkmale aufgeführt sind, die die Lösung in vorteilhafter Weise weiterentwickeln.

Es wird vorgeschlagen, eine der Abstreifkanten, oder beide, in der Einzugsrichtung der Pflanzenstängel federnd abzustützen. Dazu können Federn oder Elemente aus in sich elastischem Material, z. B. Gummi oder Kunststoff, vorgesehen sein. Durch die federnde Anordnung ergibt sich eine positive Auswirkung auf den Trennvorgang, da die Trennung des Fruchtstands vom Pflanzenstängel nicht mehr plötzlich, sondern gedämpft erfolgt.

Alternativ oder zusätzlich wird vorgeschlagen, wenigstens eine der Abstreifkanten mit überstehenden Erhebungen zu versehen, die nach oben und/oder in den Pflückspalt hinein ragen. Zwischen den Erhebungen befinden sich von Erhebungen freie Abschnitte, deren Länge wesentlich größer als die Länge der Erhebungen ist. Auf diese Weise erreicht man, dass die Pflanzenstängel und ggf. die Fruchtstände von Zeit zu Zeit auf Erhebungen treffen. Die dann auf die Fruchtstände wirkende Kraft steigt sprunghaft an, was das Abtrennen der Fruchtstände begünstigt. Die Erhebungen sind insbesondere abgerundet (buckelförmig). Die Erhebungen können auch bewirken, dass die Fruchtstände bevorzugt in eine seitliche Richtung geschleudert werden, wo sie mit einer Fangeinrichtung aufgefangen werden können.

Wiederum alternativ oder zusätzlich wird vorgeschlagen, dass eine erste Abstreifkante (oder wirksame Teile der Abstreifkante, z. B. die soeben erwähnten Erhebungen) des Pflückspalts in einer anderen vertikalen Höhe angeordnet ist als die jeweils andere Abstreifkante. Dadurch erreicht man eine in seitliche Richtung geneigte bevorzugte Auswurfrichtung der Fruchtstände, da der Pflückspalt in seitlicher Richtung geneigt ist und die Fruchtstände bevorzugt in Normalenrichtung des Pflückspalts ausgeworfen werden. Auf diese Weise wird im Pflückspalt Platz für nachfolgende Pflanzenstängel freigemacht. Oberhalb der niedrigeren Abstreifkante, d. h. in der Flugbahn der ausgeworfenen Fruchtstände, wird eine Fangeinrichtung für die Fruchtstände angebracht. Die Fangeinrichtung verhindert, dass die Fruchtstände unkontrolliert weggeschleudert werden und möglicherweise in eine benachbarte Pflückeinheit gelangen. Die aufgefangenen Kolben werden in den Mähdrescher (oder eine andere Erntemaschine) verbracht.

In den Zeichnungen sind verschiedene nachfolgend näher beschriebene Ausführungsbeispiele der Erfindung dargestellt. Es zeigt:
- Fig. 1: eine perspektivische Ansicht eines Abschnitts einer Maschine zum Ernten von stängelartigem Erntegut,
- Fig. 2: einen vertikalen Schnitt durch eine Pflückeinrichtung für eine in Figur 1 dargestellte Maschine,
- Fig. 3: eine perspektivische Ansicht einer anderen Ausführungsform einer Abstreifplatte für eine Maschine aus Figur 1,
- Fig. 4: einen Schnitt entlang der Linie 4-4 der Figur 1,
- Fig. 5: vertikale Schnitte durch drei andere Ausführungsformen von Abstreifplatten für die Maschine aus Figur 4, und
- Fig. 6: eine perspektivische Ansicht einer weiteren Ausführungsform einer Abstreifplatte für eine Maschine aus Figur 1.

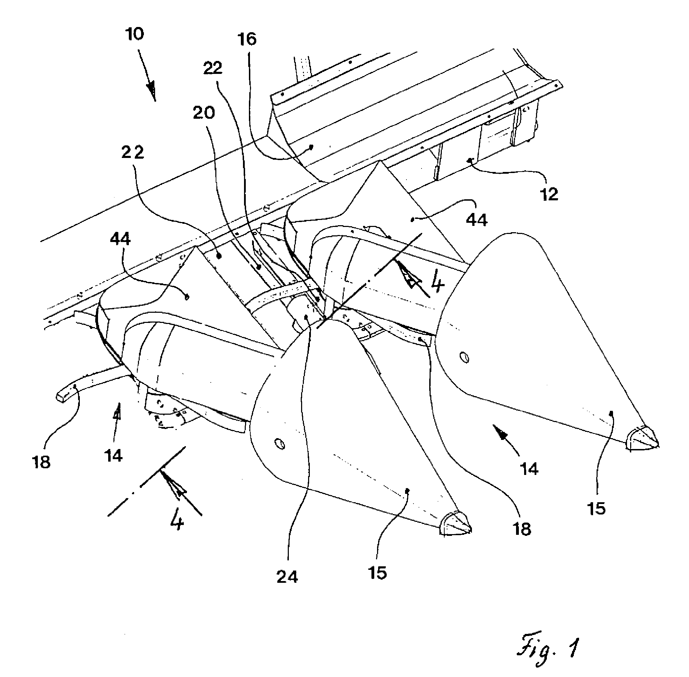

In der Figur 1 ist eine perspektivische Ansicht eines Teilbereichs einer Maschine 10 zum Ernten stängelartigen Ernteguts wiedergegeben. Die Maschine 10 umfasst einen sich quer zu ihrer Vorwärtsbewegungsrichtung erstreckenden Träger 12, an dem eine Anzahl von Pflückeinrichtungen 14 befestigt sind. Die Maschine 10 kann eine beliebige Anzahl von Pflückeinrichtungen 14 aufweisen, beispielsweise 6, 8 oder 10. An den Rückseiten der Pflückeinrichtungen 14 befindet sich ein Trog 16, in dem geerntete Maiskolben durch eine Querförderschnecke (nicht dargestellt) in seitlicher Richtung gefördert und dem Schrägförderer eines Mähdreschers, der die Maschine 10 trägt, zugeführt werden. Den Pflückeinrichtungen 14 sind Stängelteiler 15 vorgelagert, die nicht unmittelbar im Wirkungsbereich der Pflückeinrichtungen 14 stehende Pflanzen seitlich ablenken und in ihren Wirkungsbereich bringen.

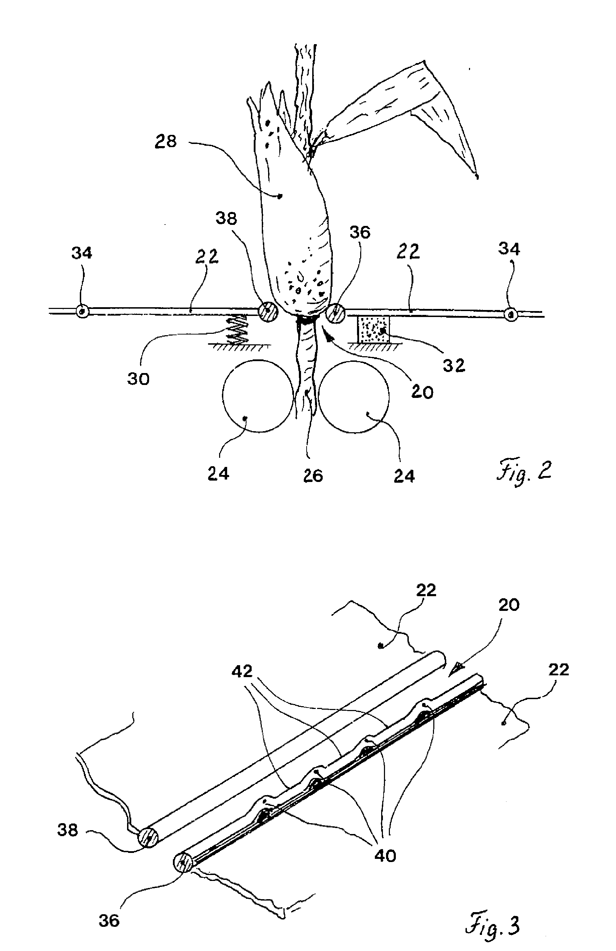

Die Pflückeinrichtungen 14 umfassen jeweils einen Einzugsförderer 18 mit einer Anzahl um eine etwa vertikal orientierte, geringfügig schräg nach vorn geneigte Welle verteilter, radial nach außen abstehender, nachlaufend gekrümmter Mitnehmerfinger. Der Einzugsförderer 18 wird um seine Achse in Drehung versetzt, um auf einem Feld stehende Pflanzen in einen Pflückspalt 20 einzuziehen, der in Abstreifplatten 22 definiert ist, und die Pflanzen entlang der Länge des Pflückspalts 20 zu transportieren. Oberhalb des einlassseitigen Endes des Pflückspalts 20 befindet sich ein in Drehung versetzbarer Schneckenförderer 24, der das Einführen der Pflanzen in den Pflückspalt 20 erleichtert. Unterhalb des Pflückspalts 20 ist ein Paar von Pflückwalzen 24 (s. Figur 2) angeordnet, die Pflanzenstängel 26 zwischen sich nach unten einziehen, sodass die Fruchtstände 28 der Pflanzen im Pflückspalt 20 abgetrennt und durch den Einzugsförderer 18 nach hinten abtransportiert werden, wo sie durch die Querförderschnecke dem Mähdrescher zugeführt werden. Die dargestellten Pflückeinrichtungen 14 sind in der DE 101 53 198 A, deren Offenbarung durch Verweis mit in die vorliegenden Unterlagen aufgenommen wird, detaillierter offenbart. Anzumerken ist, dass die vorliegende Erfindung auch an konventionellen Pflückeinrichtungen, die mit Einzugsketten ausgestattet sind, verwendet werden kann. Der Transport der Pflanzen entlang des Pflückspalts 20 kann ggf. durch die Einzugsketten, an den Pflückwalzen angebrachte Förderwindungen oder separate Förderer erfolgen. Die Abstreifplatten können aus Metall oder einem beliebigen anderen Material, wie Kunststoff, hergestellt sein.

In der Figur 2 ist ein vertikaler Schnitt durch einen Pflückbereich einer Pflückeinrichtung 14 für die in der Figur 1 dargestellte Maschine 10 wiedergegeben. Die Abstreifplatten 22 mit Abstreifkanten 36, 38 mit kreisförmigem Querschnitt, zwischen denen der Pflückspalt 20 gebildet ist, sind in der Richtung, in der die Pflanzenstängel 26 durch die Pflückwalzen 24 eingezogen werden, d. h. nach unten, federnd gelagert. Dazu ist eine Schraubenfeder 30 bzw. ein quaderförmiges Element 32 aus in sich elastischem Material vorgesehen, die zwischen den Abstreifplatten 22 und einem starr mit dem Rahmen 12 verbundenem Teil der Pflückeinrichtung 14 angeordnet sind. In der Regel ist eine Pflückeinrichtung 14 entweder mit zwei Federn 30 oder zwei Elementen 32 aus in sich federndem Material ausgestattet, obwohl auch die in Figur 2 gezeigte Konfiguration verwendbar ist. Außerdem sind die Abstreifplatten 22 im Abstand vom Pflückspalt 20 mit Schwenklagerungen 34 versehen, die sich parallel zur Längsrichtung des Pflückspalts 20 erstrecken und den Abstreifplatten 22 eine Schwenkbewegung nach unten erlauben. Alternativ oder zusätzlich sind die Abstreifplatten 22 aus in sich elastischem Material hergestellt.

Die federnde Anordnung der Abstreifplatten 22 und Abstreifkanten 36, 38 hat gegenüber der bekannten, starren Anbringung von Abstreifplatten 22 den Vorteil, dass die Abtrennung der Fruchtstände 28 vom Pflanzenstängel 26 nicht mehr plötzlich und mit einem lauten Knall, sondern gedämpft erfolgt. Dadurch wird auch die zum Abtrennen der Fruchtstände 28 erforderliche Kraft vermindert.

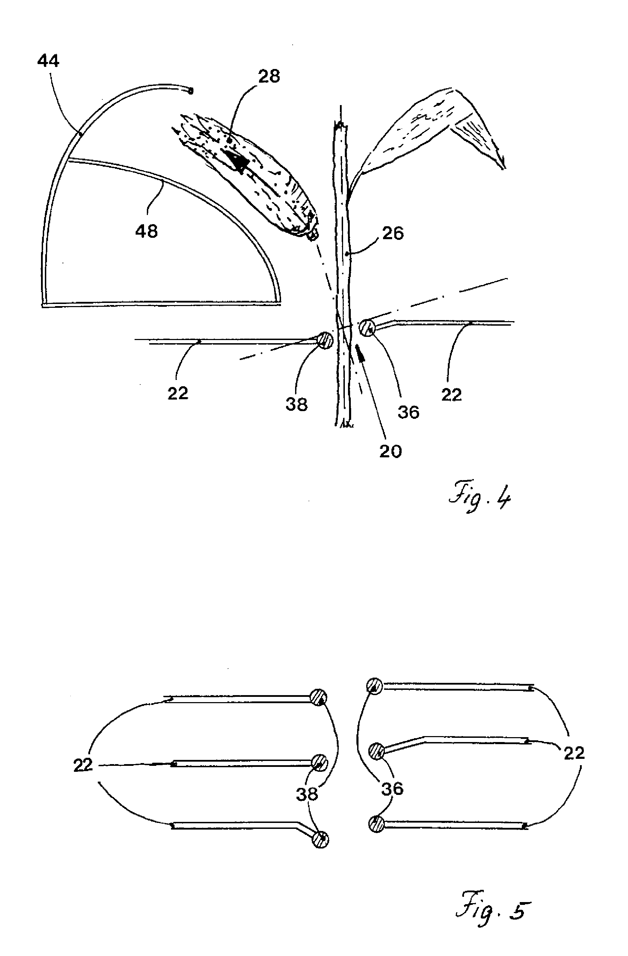

Der Trennvorgang sollte weiterhin möglichst so beeinflusst werden, dass der Fruchtstand 28 vom Pflanzenstängel 26 getrennt wird, ohne dass es zu einem Abriss bzw. Durchriss des Pflanzenstängels 26 kommt, da sonst der abgetrennte obere Teil mit durch den Mähdrescher läuft und diesen unnötig belastet. Um die Trennung des Fruchtstands vom Pflanzenstängel 26 zu erleichtern, ist in der in Figur 3 dargestellten Ausführungsform die dem Pflückspalt 20 zugewandte Abstreifkante 36 einer Abstreifplatte 22 mit in Abständen voneinander angeordneten, abgerundeten Erhebungen 40 ausgestattet. Zwischen den buckelförmigen Erhebungen 40 sind jeweils gerade, von Erhebungen 40 freie Abschnitte 42 der Abstreifkante 36 vorgesehen. Die Länge der geraden Abschnitte 42 ist ein Mehrfaches der Länge der Erhebungen 40. Die Erhebungen 40 erstrecken sich nach oben (entgegen der Einzugsrichtung der Pflanzenstängel 26) und/oder seitlich in den Pflückspalt 20 hinein. Ihre Wirkung besteht darin, dass die auf die Fruchtstände 28 wirkenden Kräfte dann sprunghaft gesteigert werden, wenn die Fruchtstände 28 auf die Erhebungen 40 treffen, was das Abtrennen erleichtert, ohne dass ein Abreißen des Pflanzenstängels 26 zu befürchten wäre. Außerdem werden die Fruchtstände 28 nicht genau nach oben ausgeworfen, sondern in die Richtung der anderen, nicht mit Erhebungen 40 ausgestatteten Abstreifplatte 22 abgelenkt, was ihr Einfangen durch eine Fangeinrichtung (s. Figur 4 und zugehörige Beschreibung) erleichtert. Die Abstreifkante 38 der anderen Abstreifplatte 22 könnte auch mit Erhebungen 40 ausgestattet werden, die in Längsrichtung des Pflückspalts 20 den Erhebungen 40 mehr oder weniger genau gegenüber liegen oder ihnen gegenüber versetzt sein könnten. Anzumerken bleibt, dass die Abstreifkanten 36, 38 einen kreisförmigen Querschnitt haben, was insbesondere aus Gründen der Verschleißfestigkeit vorteilhaft ist.

In der Figur 4 ist ein Schnitt entlang der Linien 4-4 der Figur 1 dargestellt. Die dargestellte Ausführungsform der Maschine 10 umfasst eine Fangeinrichtung 44 in Form eines C-förmig gebogenen Blechs, das oberhalb und auf der dem Einzugsförderer 18 gegenüberliegenden Seite des Pflückspalts 20 angeordnet ist. Die konkave Innenseite der Fangeinrichtung 44 dient zum Einfangen von Fruchtständen 28, die im Pflückspalt 20 von den Pflanzenstängeln 26 abgetrennt wurden und schräg seitlich nach oben geschleudert werden. Die seitliche Flugrichtung der Fruchtstände 28 wird durch die unterschiedlich hoch angeordneten Abstreifkanten 36, 38 der Abstreifplatten 22 erzielt. Die eingefangenen Fruchtstände 28 rutschen, nachdem sie gegen die Innenseite der Fangeinrichtung 44 geprallt sind, auf einem darunter angeordneten, ebenfalls gekrümmten Blech 48 nach unten in Richtung auf die Abstreifplatte 22 zu, wo sie durch den Einzugsförderer 18 erfasst und dem Trog 16 und der Querförderschnecke zugeführt werden.

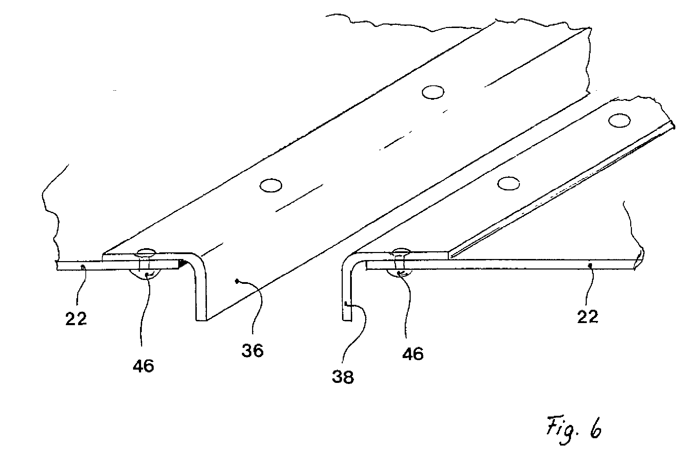

Neben den in Figur 3 und Figur 4 gezeigten Konfigurationen der Abstreifplatten 22 kommen auch die drei in Figur 5 übereinander dargestellten Anordnungen in Frage. Auch eine Anordnung gemäß Figur 6, bei der durch Schrauben 46 und Muttern oder Nieten lösbar angebrachte, rechtwinklige Abstreifkanten 36, 38 verwendet werden, ist verwendbar.

Die Abstreifplatten 22 und Abstreifkanten 36, 38 können bei den Ausführungsformen nach den Figuren 3 bis 6 starr oder - wie in Figur 2 - in Einzugsrichtung federnd mit dem Rahmen 12 der Maschine 10 verbunden sein.

## Patentansprüche

1. Pflückeinrichtung (14) mit Abstreifkanten (36, 38), zwischen denen ein Pflückspalt (20) definiert ist, und mit Mitteln zum Einziehen von Pflanzenstängeln (26) in den Pflückspalt (20), so dass Fruchtstände (28) durch die Abstreifkanten (36, 38) von den Pflanzenstängeln (26) abtrennbar sind, **dadurch gekennzeichnet, dass** wenigstens eine der Abstreifkanten (36, 38) in der Einzugsrichtung der Pflanzenstängel (26) federnd abgestützt ist.

2. Pflückeinrichtung (14) mit Abstreifkanten (36, 38), zwischen denen ein Pflückspalt (20) definiert ist, und mit Mitteln zum Einziehen von Pflanzenstängeln (26) in den Pflückspalt (20), so dass Fruchtstände (28) durch die Abstreifkanten (36, 38) von den Pflanzenstängeln (26) abtrennbar sind, insbesondere nach Anspruch 1, **dadurch gekennzeichnet, dass** zumindest eine Abstreifkante (36) mit in den Pflückspalt (20) und/oder entgegen der Einzugsrichtung des Pflanzenstängels (26) überstehenden Erhebungen (40) ausgestattet ist, zwischen denen die Abstreifkante (36) mit von Erhebungen freien Abschnitten (42) versehen ist, und dass die Länge der von Erhebungen freien Abschnitte (42) ein Mehrfaches der Länge der Erhebungen (40) ist.

3. Pflückeinrichtung nach Anspruch 2, **dadurch gekennzeichnet, dass** die Erhebungen (40) abgerundet sind.

4. Pflückeinrichtung (14) mit Abstreifkanten (36, 38), zwischen denen ein Pflückspalt (20) definiert ist, und mit Mitteln zum Einziehen von Pflanzenstängeln (26) in den Pflückspalt (20), so dass Fruchtstände (28) durch die Abstreifkanten (36, 38) von den Pflanzenstängeln (26) abtrennbar sind, wobei eine erste Abstreifkante (36) oder wirksame Teile, insbesondere Erhebungen (40), der ersten Abstreifkante (36) in einer anderen Höhe angebracht ist als eine zweite Abstreifkante (38), insbesondere nach einem der vorhergehenden Ansprüche, **dadurch gekennzeichnet, dass** oberhalb der zweiten Abstreifkante (38) eine Fangeinrichtung (44) für die Fruchtstände (28) angeordnet ist.
